# EUROPEAN PATENT APPLICATION

(11) **EP 4 574 251 A1**
(43) Date of publication of application: **25.06.2025**
(21) Application number: 24186372.9
(22) Date of filing: 03.07.2024
(51) Int. Cl.: B01F 35/511

(54) **SPLICED CERAMIC SHEET AND CERAMIC SHEET LINER**

(30) Priority: 22.12.2023 CN 202323529844 U
(71) Applicant: Hunan Ongoal Intelligent Technology Co., Ltd., Zhuzhou Hunan 412000 (CN)
(72) Inventor: YU, Ziyi, Zhuzhou, 412000 (CN); SUN, Wanli, Zhuzhou, 412000 (CN)
(74) Representative: Monteiro Alves, Inês

(57) **Abstract**

Disclosed are a spliced ceramic sheet (100) and a ceramic sheet liner thereof. The spliced ceramic sheet (100) includes two mating side surfaces (1) opposite to each other. One mating side surface (1) is provided with a mating rib (11) and another mating side surface (1) is provided with a mating groove (12), and the mating groove (12) runs through both ends of the mating side surface (1) in a length direction. The mating rib (11) of the spliced ceramic sheet (100) is configured to be installed in the mating groove (12) of an adjacent spliced ceramic sheet (100), a positioning structure is formed between the mating rib (11) and the mating groove (12), and the positioning structure is configured to position the mating rib (11) in the mating groove (12).

## Description

### TECHNICAL FIELD

The present application relates to the technical field of material processing, and in particular to a spliced ceramic sheet and a ceramic sheet liner.

### BACKGROUND

Currently, in the material processing industry, to prevent direct contact between materials and metal, a non-metallic liner is commonly added to the inner wall of the cavity. Among these, ceramic liners offer several advantages: good wear resistance, low cost, wide applicability, low operating resistance, corrosion resistance, scale prevention, excellent temperature resistance, and thermal shock resistance, as well as easy installation and construction.

At present, most equipment manufacturers commonly use small flat ceramic sheets spliced and adhered together to create wear-resistant liners. However, the adhesion between the ceramic sheets is not stable, resulting in gaps between the tiles. Additionally, there are gaps between the ceramic sheets and the inner wall of the equipment, which ultimately leads to the ceramic sheets easily falling off. Therefore, the connection between spliced ceramic sheets in the related art is not stable.

### SUMMARY

The main objective of the present application is to provide a spliced ceramic sheet and a ceramic sheet liner thereof, aiming to solve the problem of unstable connection between spliced ceramic sheets in the related art.

In order to achieve the above objective, the present application provides a spliced ceramic sheet including two mating side surfaces opposite to each other.

In an embodiment, one mating side surface is provided with a mating rib and another mating side surface is provided with a mating groove, and the mating groove runs through both ends of the mating side surface in a length direction.

In an embodiment, the mating rib of the spliced ceramic sheet is configured to be installed in the mating groove of an adjacent spliced ceramic sheet, a positioning structure is formed between the mating rib and the mating groove, and the positioning structure is configured to position the mating rib in the mating groove.

In an embodiment, a positioning protrusion is provided on one surface of opposite side walls of the mating rib and the mating groove, a cooperation groove is recessed on another surface of the opposite side walls of the mating rib and the mating groove, and the positioning protrusion is snap-fitted and positioned in the cooperation groove.

In an embodiment, the positioning protrusion and the cooperation groove form a positioning group, and a plurality of positioning groups are provided at intervals.

In an embodiment, the mating rib and the mating groove form a mating group, and a plurality of mating groups are provided at intervals along a width direction of the mating side surface.

In an embodiment, the spliced ceramic sheet is configured to extend in an arc shape along a length direction of the mating side surface.

In an embodiment, a spacing between the two mating side surfaces is gradually reduced along the length direction of the mating side surface.

In an embodiment, the spliced ceramic sheet further comprises two connection side surfaces opposite to each other, the two connection side surfaces are located between the two mating side surfaces, the connection side surface of the spliced ceramic sheet is configured to connect to the connection side surface of another spliced ceramic sheet, and a sealing structure is formed between the two connection side surfaces on the two adjacent spliced ceramic sheets.

In an embodiment, one of the two connection side surfaces on two adjacent spliced ceramic sheets forms a guide slope, the guide slope is inclined along a thickness direction of the spliced ceramic sheet, another connection side surface is correspondingly formed with a matching slope, and the matching slope is configured to fit onto the guide slope.

In an embodiment, the two connection side surfaces are extended in an arc shape along a length direction of the connection side surface.

The present application further provides a ceramic sheet liner, including the above-mentioned spliced ceramic sheet. A plurality of spliced ceramic sheets are provided, and are spliced with each other.

In the spliced ceramic sheets provided in the present application, mating ribs and mating grooves are respectively formed on the two mating side surfaces of the spliced ceramic sheets. During installation, the corresponding mating ribs in the two adjacent spliced ceramic sheets are installed into the mating grooves, so that the two spliced ceramic sheets are fixedly connected. Additionally, through the positioning structure between the mating ribs and the mating grooves, after installation in place, the mating ribs are positioned in the mating grooves, ensuring a stable connection between the two adjacent spliced ceramic sheets and avoiding position shaking.

### BRIEF DESCRIPTION OF THE DRAWINGS

FIG. 1 is a schematic diagram of three-dimensional structure of a spliced ceramic sheet according to an embodiment of the present application.
FIG. 2 is a schematic diagram of the three-dimensional structure of the spliced ceramic sheet according to another embodiment of the present application.
FIG. 3 is a schematic diagram of the three-dimensional structure of the spliced ceramic sheet according to another embodiment of the present application.
FIG. 4 is a schematic diagram of the three-dimensional structure of a ceramic sheet liner according to an embodiment of the present application.

Explanation of reference signs:

| Reference sign | Name | Reference sign | Name |
|---|---|---|---|
| 100 | splicing ceramic sheet | 12 | mating groove |
| 1 | mating side surface | 2 | connection side surface |
| 11 | mating rib | | |

The objective, features and advantages of the present application will be further described in conjunction with the embodiments and with reference to the accompanying drawings.

### DETAILED DESCRIPTION OF THE EMBODIMENTS

The technical solutions in the embodiments of the present application will be clearly and completely described below with reference to the drawings in the embodiment of the present application. Obviously, the described embodiments are only a part of the embodiments of the present application, not all of the embodiments. Based on the embodiments in the present application, all other embodiments perceived by those skilled in the art without creative effort should be fallen within the protection scope of the present application.

It should be noted that all of the directional instructions in the embodiments of the present application (such as, up, down, left, right, front, rear....) are only used to explain the relative position relationship and movement of each component under a specific attitude (as shown in the drawings), if the specific attitude changes, the directional instructions will change correspondingly.

Besides, the descriptions in the present application that refer to "first," "second," etc. are only for descriptive purposes and are not to be interpreted as indicating or implying relative importance or to implicitly indicate the number of technical features indicated. Thus, a feature defined as "first" or "second" may explicitly or implicitly include at least one of the features. In addition, the meaning of "and/or" appearing in the entire text is to include three parallel solutions. For example, "A and/or B" includes only A, or only B, or both A and B. In addition, technical solutions between the embodiments can be combined with each other, but must be based on the realization of the technical solutions by those skilled in the art, and when the technical solutions are contradictory to each other or cannot be realized, the technical solutions should be considered that the combination does not exist, and the technical solutions are not fallen within the protection scope claimed in the present application.

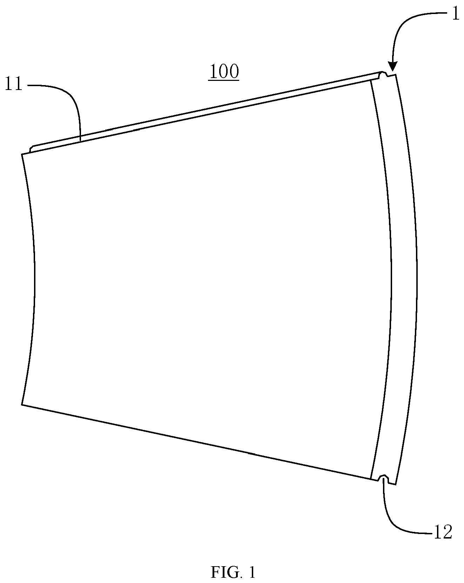

As shown in FIG. 1, the present application provides a spliced ceramic sheet 100. The spliced ceramic sheet 100 includes two mating side surfaces 1 opposite to each other. A mating rib 11 is provided on one of the mating side surfaces 1. A mating groove 12 is provided on another mating side surface 1. The mating groove 12 runs through both ends of the mating side surface 1 where it is located in the length direction. The mating rib 11 of the spliced ceramic sheet 100 is configured to be installed in the mating groove 12 of the adjacent spliced ceramic sheet 100. A positioning structure is formed between the mating rib 11 and the mating groove 12. The positioning structure is configured to position the mating rib 11 in the mating groove 12.

In the spliced ceramic sheet 100 provided in the present application, a mating rib 11 is formed on one mating side surface 1 of the spliced ceramic sheet 100 and a mating groove 12 is formed on another mating side surface 1 of the spliced ceramic sheet 100. During installation, the corresponding mating rib 11 in the two adjacent spliced ceramic sheets 100 is installed into the mating groove 12, so that the two spliced ceramic sheets 100 are fixedly connected. Additionally, through the positioning structure between the mating rib 11 and the mating groove 12, after installation in place, the mating rib 11 is positioned in the mating groove 12, ensuring a stable connection between the two adjacent spliced ceramic sheets 100, and avoiding position shaking.

It should be noted that the positioning structure has multiple implementations. For example, positioning holes are respectively provided on the opposite side walls of the mating rib 11 and the mating groove 12. The positioning is performed by external positioning pins.

In an embodiment, one of the opposite side walls of the mating rib 11 and the mating groove 12 is provided with a positioning protrusion, and another surface of the opposite side walls is recessed with a cooperation groove. The positioning protrusion is snap-fitted and positioned in the cooperation groove. In an embodiment, the self-positioning of the mating rib 11 and the mating groove 12 is achieved by means of the positioning protrusion and the cooperation groove, without relying on external parts, which facilitates rapid positioning.

In an embodiment, the positioning protrusion and the cooperation groove form a positioning group. A plurality of positioning groups are provided at intervals to facilitate the stability of positioning.

It should be noted that, in an embodiment, the positioning protrusion forms an interference fit between the mating rib and the mating groove, and the cooperation groove is configured to accommodate the positioning protrusion. Therefore, during the installation process, when the positioning protrusion moves into the cooperation groove, the positioning protrusion cannot automatically leave the cooperation groove.

In order to ensure the stability of the connection between the two adjacent spliced ceramic sheets, the mating ribs 11 and the mating grooves 12 form a mating group. A plurality of mating groups are provided at intervals along the width direction of the mating side surface 1. So that when the spliced ceramic sheets 100 with larger thickness are connected, the plurality of mating groups can be configured to stabilize in the thickness direction, which avoids the problem that a single mating group connection is easily damaged and causes the positioning failure.

In an embodiment provided in the present application, the spliced ceramic sheet 100 is extended in an arc shape along the length direction of the mating side surface 1, so that the spliced ceramic sheet 100 is provided in an arc-shaped plate, and a plurality of the spliced ceramic sheets 100 can be mated to form a ring, so as to form an inner liner.

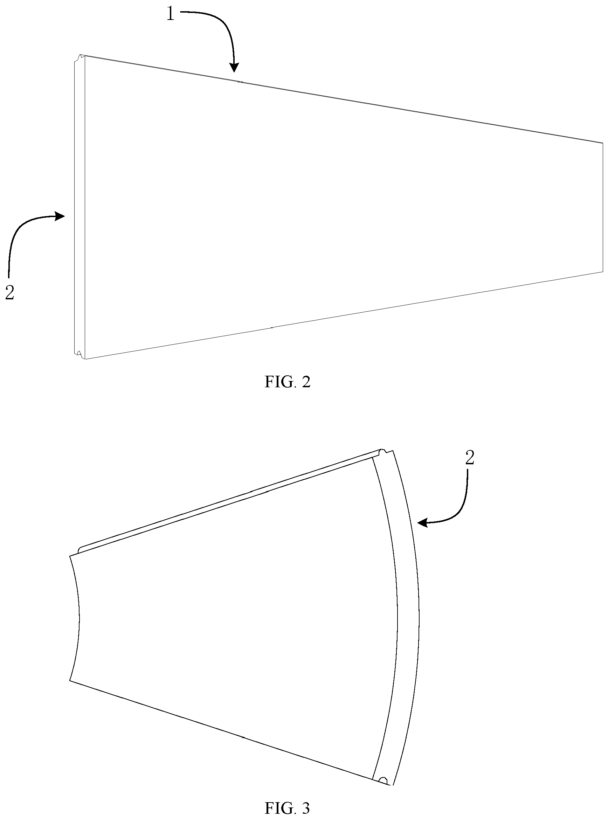

As shown in FIG. 2, the spacing between the two butting sides 1 is gradually reduced along the length direction. In an embodiment, it is convenient to adapt to the splicing environment with complex inner diameter, so that the spliced ceramic sheet 100 is provided in a trapezoidal shape.

In another embodiment provided in the present application, the spliced ceramic sheet 100 also includes two connection side surfaces 2 opposite to each other, and two connection side surfaces are located between the two mating side surfaces 1. The connection side surface 2 of the spliced ceramic sheet 100 is configured to connect to the connection side surface 2 of another spliced ceramic sheet 100. A sealing structure is formed between the two connection side surfaces 2 on two adjacent spliced ceramic sheets 100. In an embodiment, the spliced ceramic sheets 100 can be spliced not only along the width direction of the mating side surface 1, but also in the length direction of the mating side surface 1, so as to form ceramic protective surfaces of different sizes. A sealing structure is provided between the two adjacent connection side surfaces 2 to ensure the sealing between the two adjacent spliced ceramic sheets and avoid the gap between the two adjacent spliced ceramic sheets 100 being too large.

In an embodiment, one of the two connection side surfaces 2 on the two adjacent spliced ceramic sheets 100 forms a guide slope. The guide slope is inclined along the thickness direction of the spliced ceramic sheet 100. A matching slope is correspondingly formed on another connection side surface. The matching slope is configured to fit onto the guide slope. In an embodiment, through the matching guide slope and the matching slope, during the installation process, the two connection side surfaces 2 are fitted along the slope, and the gap is transferred to the slope and the end face of the spliced ceramic sheet 100. The gap can thus be effectively reduced. And during the installation process, the gap has a certain three-dimensional extension, so as to avoid falling off between the two adjacent spliced ceramic sheets 100 during shaking, and can automatically return to their original position along the slope.

In addition, as shown in FIG. 3, the spliced ceramic sheets 100 are extended in an arc shape along the length direction of the connection side surface, so as to form an arc-shaped plate and to be spliced at different angles.

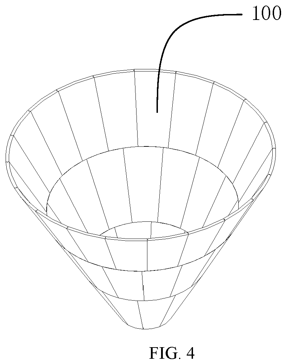

As shown in FIG. 4, based on the above-mentioned spliced ceramic sheet 100, the present application further provides a ceramic sheet liner. The ceramic sheet liner includes all the technical features of the above-mentioned spliced ceramic sheet 100. Therefore, it also has the technical effects brought by all the above-mentioned technical features, and description will be repeated here.

In the ceramic sheet liner provided in the present application, a plurality of the spliced ceramic sheets 100 are provided. The plurality of spliced ceramic sheets are spliced with each other to facilitate liner protection.

The spliced ceramic sheets 100 provided by the present application can be widely used as a ceramic liner in various equipment within the material processing field. For instance, this technology can be applied to enhance the durability and performance of plow mixers, paddle dryers, and jet mills.

In plow mixers, materials generate significant friction and impact on the equipment's inner walls during mixing. By installing the spliced ceramic sheets 100 on the inner walls, the service life of the equipment can be effectively extended. The installation process involves splicing multiple spliced ceramic sheets 100 along the inner wall, where the mating rib 11 and mating groove 12 interlock to secure the connection. The positioning structure between the mating rib 11 and mating groove 12 ensures accurate positioning of each ceramic sheet, preventing loosening or detachment due to vibrations during mixing.

In paddle dryers, the drying process often involves high temperatures and chemical corrosion, which can damage traditional metal liners. The spliced ceramic sheets 100 provided in this application exhibit excellent heat resistance and corrosion resistance, maintaining stability in such environments. The ceramic sheets are spliced along the inner wall of the paddle dryer, with the mating rib 11 and mating groove 12 interlocking, and the positioning structure ensuring stability and sealing, thereby enhancing the equipment's durability and efficiency.

In j et mills, the high-speed airflow causes severe wear on the equipment's inner walls. The use of spliced ceramic sheets 100 can effectively reduce wear and extend the maintenance cycle of the equipment. The installation involves splicing the ceramic sheets along the inner wall of the jet mill, with the mating rib 11 and mating groove 12 interlocking to form a tight connection. The positioning structure ensures that each ceramic sheet remains in place under high-speed airflow, maintaining the integrity of the inner wall.

The above are only some embodiments of the present application, and do not limit the scope of the present application thereto. Under the inventive concept of the present application, equivalent structural transformations made according to the description and drawings of the present application, or direct/indirect application in other related technical fields are included in the scope of the present application.

## Claims

1. A spliced ceramic sheet (100), **characterized by** comprising: two mating side surfaces (1) opposite to each other, wherein:
one mating side surface (1) is provided with a mating rib (11) and another mating side surface (1) is provided with a mating groove (12), and the mating groove (12) runs through both ends of the mating side surface (1) in a length direction;
the mating rib (11) of the spliced ceramic sheet (100) is configured to be installed in the mating groove (12) of an adjacent spliced ceramic sheet (100), a positioning structure is formed between the mating rib (11) and the mating groove (12), and the positioning structure is configured to position the mating rib (11) in the mating groove (12).

2. The spliced ceramic sheet (100) according to claim 1, wherein a positioning protrusion is provided on one surface of opposite side walls of the mating rib (11) and the mating groove (12), a cooperation groove is recessed on another surface of the opposite side walls of the mating rib (11) and the mating groove (12), and the positioning protrusion is snap-fitted and positioned in the cooperation groove.

3. The spliced ceramic sheet (100) according to claim 2, wherein the positioning protrusion and the cooperation groove form a positioning group, and a plurality of positioning groups are provided at intervals.

4. The spliced ceramic sheet (100) according to claim 1, wherein the mating rib (11) and the mating groove (12) form a mating group, and a plurality of mating groups are provided at intervals along a width direction of the mating side surface (1).

5. The spliced ceramic sheet (100) according to claim 1, wherein the spliced ceramic sheet (100) is configured to extend in an arc shape along a length direction of the mating side surface (1).

6. The spliced ceramic sheet (100) according to claim 1, wherein a spacing between the two mating side surfaces (1) is gradually reduced along the length direction of the mating side surface (1).

7. The spliced ceramic sheet (100) according to claim 1, wherein the spliced ceramic sheet (100) further comprises two connection side surfaces (2) opposite to each other, the two connection side surfaces (2) are located between the two mating side surfaces (1), the connection side surface (2) of the spliced ceramic sheet (100) is configured to connect to the connection side surface (2) of another spliced ceramic sheet (100), and a sealing structure is formed between the two connection side surfaces (2) on the two adjacent spliced ceramic sheets (100).

8. The spliced ceramic sheet (100) according to claim 7, wherein one of the two connection side surfaces (2) on two adjacent spliced ceramic sheets (100) forms a guide slope, the guide slope is inclined along a thickness direction of the spliced ceramic sheet (100), another connection side surface (2) is correspondingly formed with a matching slope, and the matching slope is configured to fit onto the guide slope.

9. The spliced ceramic sheet (100) according to claim 7, wherein the two connection side surfaces (2) are extended in an arc shape along a length direction of the connection side surface (2).

10. A ceramic sheet liner, **characterized by** comprising: the spliced ceramic sheet (100) according to any one of claims 1 to 9; wherein a plurality of spliced ceramic sheets (100) are provided and are spliced with each other.
